# EUROPÄISCHE PATENTSCHRIFT

(11) **EP 1 310 590 B1**
(45) Veröffentlichungstag und Bekanntmachung des Hinweises auf die Patenterteilung: **11.04.2007**
(21) Anmeldenummer: 02024035.4
(22) Anmeldetag: 28.10.2002
(51) Int. Cl.: D06F 75/14, A47J 31/44

(54) **Bügeleisen mit einem Flüssigkeitsbehälter und Füllstandsanzeige**
Iron with liquid reservoir and liquid-level indicator
Fer à repasser avec un réservoir pour un liquide avec un indicateur de niveau de remplissage

(30) Priorität: 09.11.2001 DE 10155085
(43) Veröffentlichungstag der Anmeldung: 14.05.2003
(73) Patentinhaber: BSH Bosch und Siemens Hausgeräte GmbH, 81739 München (DE)
(72) Erfinder: Kramer, Siegmund, 83417 Kirchanschöring (DE); Meyer, Brigitte, 83339 Chieming (DE)

(56) Entgegenhaltungen:
- DE-A- 4 426 686
- FR-A- 2 278 829
- US-A- 3 298 119
- DATABASE WPI Derwent Publications Ltd., London, GB; Page 000, AN 1985-072542 XP002248982 & JP 56 139800 A (TOSHIBA DENKI KIGU KK), 31. Oktober 1981 (1981-10-31)

## Beschreibung

Die Erfindung betrifft Bügeleisen mit einem Flüssigkeitsbehälter und einer Füllmenge anzeigenden Füllstandsanzeige.

Füllstandsanzeigen können in allen Haushaltsgeräten eingesetzt werden, die über ein Behälter verfügen deren tatsächlicher Flüssigkeitsinhalt dem Benutzer angezeigt werden soll. So ist es z.B. sinnvoll den Benutzer über den tatsächlichen Füllstand einer Flüssigkeit zu informieren, die während der Benutzung des Haushaltsgerätes verbraucht wird.

Ein Haushaltsgerät mit einer Füllstandsanzeige ist aus GB 2 315 403 A bekannt. Der elektrische Wasserkocher umfasst eine Wasserstandsanzeige, die einen Schwimmkörper aufweist, der in einem Flüssigkeitsbehälter angeordnet ist. Der Schwimmkörper ist an einem Arm befestigt, der mit seinem dem Schwimmkörper entgegengesetzten Ende oben am Wasserkocher gegenüber einer Ausgießöffnung schwenkbar gelagert ist. Dies hat nachteiligerweise zur Folge, dass bei einer Neigung des Wasserkochers zur Ausgießöffnung hin die Flüssigkeit auf der Seite der Ausgießöffnung steigt und den Schwenkarm nach oben auslenkt, so dass ohne ein Ausgießen von Flüssigkeit eine Veränderung des Füllstands angezeigt wird. Weiterhin steht der Schwimmkörper mit einem Anzeigeelement in Verbindung, wobei die Position des Anzeigeelementes von der Position des Schwimmkörpers abhängt. Über dem Anzeigeelement ist ein Anzeigefeld angeordnet, in dem das Anzeigeelement von außen sichtbar ist, wenn der Wasserstand einen vorgegebenen Wert erreicht.

Ein weiteres übliches Haushaltsgerät mit einem Flüssigkeitsbehälter stellt beispielsweise das Dampfbügeleisen dar. Um Dampf während des Bügelbetriebes erzeugen zu können, ist üblicherweise ein durchsichtiger Behälter vorgesehen, der mit Wasser gefüllt ist. Während dem Dampfbetrieb verringert sich die vorhandene Wassermenge fortlaufend und der Benutzer ist aufgefordert die Füllmenge zu überwachen, damit er vor dem völligen entleeren des Flüssigkeitsbehälters Wasser nachfüllt. Nachteilig ist bei den bekannten Lösungen jedoch, dass je nach Betriebsposition, bzw. Neigungslage des Haushaltsgeräts der Flüssigkeitsspiegel im Flüssigkeitsbehälter unterschiedlich verläuft. Bei den bekannten Füllstandsanzeigen führt dies zu unterschiedlichen Füllstandsanzeigen in verschiedenen Neigungslagen, obwohl die Füllmenge die gleiche ist.

Die US 3 298 119 A betrifft eine Vorrichtung zur Wasserstandsanzeige in einem elektrischen Dampfbügeleisen.

Die DE 4 426 686 A1 betrifft eine Füllstandsmesseinrichtung für ein Flüssigkeitsbehälter, insbesondere einen Kraftstoffbehälter eines Fahrzeugs. Die Bestimmung des Füllstandes erfolgt durch einen Schwimmer mittels eines an einem Schwimmerarm verstellbaren elektrischen Bewegungswandlers.

Die FR 2 278 829 A betrifft elektrische Hausgeräte, insbesondere Bügeleisen, insbesondere die Verbesserung von Dampfbügeleisen.

Derwent, 1985-075 25 42, JP 56 139 800 A betrifft eine maximale Füllstandsmarkierung für Dampfbügeleisen, die eine vollständige Befüllung des Tanks im horizontalen und schrägen bzw. gekippten Zustand anzeigt.

Die Aufgabe der Erfindung besteht darin, ein Bügeleisen mit einer verbesserten und den Füllstand korrekt wiedergebenden Füllstandsanzeige bereitzustellen. Dabei wird es auch als ausreichend angesehen, wenn der Füllstand zumindest annähernd korrekt wiedergegeben wird und die Abweichen der angezeigten Füllmenge von der tatsächlichen Füllmenge nur unwesentlich abweicht.

Die Aufgabe der Erfindung wird durch die Merkmale des Anspruchs 1 gelöst. Vorteilhafte Weiterbildungen und Ausgestaltungen der vorliegenden Erfindung sind in den Unteransprüchen definiert.

Ein wesentlicher Vorteil der Erfindung besteht darin, dass die Füllstandsanzeige unabhängig von den Betriebspositionen bzw. den Neigungslagen des Bügeleisens den Füllstand zumindest annähernd korrekt anzeigt. Die Füllstandsanzeige ist im wesentlichen unabhängig von der Neigung des Bügeleisens so dass in den verschiedenen Betriebspositionen d.h. bei verschiedenen Neigungen des Bügeleisens trotz der bezüglich des Flüssigkeitsbehälters unterschiedlich verlaufenden Flüssigkeitsspiegel die Füllmenge richtig angezeigt wird. Der Winkelstellungsbereich umfasst die waagrechte Winkelstellung während des Bügelvorgangs und die schräge Winkelstellung in der Ruheposition des Bügeleisens und vorteilhafterweise weitere beim üblichen Gebrauch auftretenden Winkelstellungen bezüglich der Neigung des Bügeleisens. Dies ist bei Bügeleisen von Vorteil, bei denen in aller Regel der Neigungswinkel, in der sie befüllt werden, von der Neigungslage im Bügelbetrieb abweicht. Beispielsweise werden Bügeleisen im allgemeinen in senkrechter oder zumindest schräger Stellung befüllt, wohingegen die Neigungslage im Bügelbetrieb üblicherweise waagrecht ist. Es kann vorgesehen sein, dass die von der Neigungslage unabhängige Füllstandsanzeige nur für einen bestimmten Bereich von Füllmengen den korrekten Füllstand anzeigt. Als korrekt angezeigter Füllstand können auch unwesentliche Abweichungen in der Füllstandsanzeige angesehen werden. Eine unwesentliche Abweichung im Füllstand ist sicherlich bei einer Abweichung von weniger als 10% gegeben.
Vorzugsweise soll jedoch der Füllstand stets exakt angezeigt werden.

Um eine von der Neigungslage weitgehend unabhängige Füllstandsanzeige zu verwirklichen, wird ein Schwimmkörper verwendet.

Bei der Füllstandsanzeige in Ausführungsform mit Schwimmkörper ist dieser entlang einer Bewegungsbahn zwangsgeführt, die so verläuft, dass für jede bestimmte Füllmenge der Schwimmkörper in den verschiedenen Neigungslagen eine zumindest annähernd gleiche Höhenposition einnimmt. Vorzugsweise verläuft die Bewegungsbahn entlang einer Reihe von Raumpunkten, welche bei der ihnen jeweils zugeordneten Füllmenge einen geringen oder keinen Abstand zu den Flüssigkeitsspiegeln besitzen, die von der jeweiligen Füllmenge bei den verschiedenen Neigungslagen gebildet werden. Die Lage der Schnittpunkte der Bewegungsbahn mit den Flüssigkeitsspiegeln bei verschiedenen Füllmengen verändert sich bei einem Verschwenken des Bügeleisens innerhalb eines bestimmten Winkelstellungsbereichs möglichst wenig oder sogar gar nicht. Die Bewegungsbahn verläuft derart, dass unabhängig von einer jeweiligen Neigungslage des Bügeleisens für jede bestimmte Füllmenge der Schwimmkörper in der Bewegungsbahn die gleiche oder zumindest annähernd die gleiche Füllstandsposition einnimmt.

Um eine solche Bewegungsbahn zu ermitteln, kann der Flüssigkeitsbehälter mit einer bestimmten Menge Flüssigkeit gefüllt werden, das Bügeleisen in verschiedene Winkelstellungen gebracht und die sich für die verschiedenen Winkelstellungen ergebenden Flüssigkeitsspiegel bei der bestimmten Füllmenge ermittelt werden. Insbesondere wird das Bügeleisen in verschiedene üblicherweise im Betrieb des Bügeleisens auftretende Neigungslagen gebracht. Anschließend wird der Punkt im Flüssigkeitsbehälter ermittelt, an dem sich der Abstand zu den Flüssigkeitsspiegeln der verschiedenen Winkelstellungen am wenigsten ändert. Dazu kann der Punkt ermittelt werden, an dem die Summe der Abstände zu den Flüssigkeitsspiegeln der verschiedenen Winkelstellungen am geringsten ist. Dies wird für verschiedene und insbesondere die im üblichen Betrieb auftretenden Füllmengen durchgeführt, so dass eine Reihe von Punkten ermittelt wird, durch die die Bewegungsbahn für den Schwimmkörper gelegt wird. Idealerweise schneiden sich bei einer bestimmten Füllmenge die Flüssigkeitsspiegel aller Winkelstellungen des bestimmten Winkelbereichs in einer Gerade. Sobald die Bewegungsbahn durch einen beliebigen Punkt dieser Gerade verläuft, ist für diese bestimmte Füllmenge die Lage des entlang dieser Bewegungsbahn zwangsgeführten Schwimmkörpers in Bezug auf die Bewegungsbahn für alle Winkelstellungen des Bereichs die gleiche, so dass die Füllstandsanzeige zumindest in diesem Winkelstellungsbereich unabhängig von der Neigungslage diesen Füllstand immer richtig anzeigen kann.

Dabei kann es jedoch auch vorkommen, dass sich kein Punkt finden lässt, der bei einer bestimmten Füllmenge zu allen sich bei verschiedenen Winkelstellungen ergebenden Flüssigkeitsspiegeln den Abstand Null besitzt. Dies kann insbesondere auf Grund der inneren Formgebung des Flüssigkeitsbehälters der Fall sein, die maßgeblich die Lage des Flüssigkeitsspiegels für eine bestimmte Füllmenge und eine bestimmte Winkelstellung bestimmt. Vorteilhafterweise ist daher der Flüssigkeitsbehälter innen so ausgestaltet, dass bei verschiedenen Füllmengen die Drehachse, um die sich der Flüssigkeitsspiegel beim Drehen des Bügeleisens innerhalb des Bereichs der möglichen Neigungslagen herum schwenkt, ihren Ort möglichst wenig verändert. Andernfalls würde sich wiederum der beschriebene Nachteil ergeben, dass sich die Lage des Schwimmkörpers in Bezug auf die Bewegungsbahn beim Verdrehen verändern und bei gleichbleibender Füllmenge ein veränderlicher Füllstand angezeigt würde.

Falls sich kein Punkt zur Anordnung des Schwimmkörpers finden läßt, an dem dessen Lage bei einer bestimmten Füllmenge innerhalb des Betriebswinkelbereichs von der Winkelstellung unabhängig ist, können zur Bestimmung der Lage der Bewegungsbahn auch nur einige bestimmte Winkelstellungen herangezogen werden. Werden beispielsweise nur zwei Winkelstellungen herangezogen, schneiden sich bei jeder jeweiligen Füllmenge die Flüssigkeitsspiegel in den beiden Winkelstellungen in genau einer jeweiligen Geraden. Verläuft die Bewegungsbahn durch diese Gerade, nimmt der Schwimmkörper bei gleichbleibender Füllmenge in beiden Winkelstellungen die gleiche Position ein, so dass zumindest in diesen beiden Winkelstellungen die gleiche bzw. korrekte Füllmenge angezeigt werden kann. Werden mehr als zwei Winkelstellungen herangezogen, kann wieder der Fall eintreten, dass sich kein Punkt finden läßt, an dem die Lage des Schwimmkörpers bei gleichbleibender Füllmenge in allen herangezogenen Winkelstellungen die gleiche ist. Allerdings können gezielt die Winkelstellungen zur Bestimmung der Lage der Bewegungsbahn herangezogen werden, bei denen eine korrekte Anzeige des Füllstands wichtiger ist. Dies können die Winkelstellungen sein, in denen der Füllstand von Bedeutung ist oder in denen der Füllstand öfters abgelesen wird, wie beispielsweise die Stellungen, in denen die Flüssigkeit eingefüllt oder verbraucht wird. Bei einem Bügeleisen sind dies die waagrechte Winkelstellung während des Bügelvorganges und eine schräge Winkelstellung in der Ruheposition.

Beim Heranziehen von zwei Winkelstellungen kann die Lage der Bewegungsbahn besonders einfach dadurch ermittelt werden, dass bei einer bestimmten Füllmenge die Stellungen der Flüssigkeitsspiegel in den beiden Winkelstellungen und die Schnittgerade dieser Flüssigkeitsspiegel ermittelt werden. Anschließend wird eine Zwischenebene so angeordnet, dass sie den Winkel zwischen den beiden Flüssigkeitsspiegeln halbiert und deren Schnittgerade vollständig in dieser Zwischenebene liegt.

Wenn der Schwimmkörper rotationssymmetrisch in Bezug auf die Drehachse der Neigungslagen des Bügeleisens ist, verändert sich die Eintauchtiefe des Schwimmkörpers in der Flüssigkeit bei veränderlicher Neigung des Schwimmkörpers nicht, falls dieser drehfest mit dem Bügeleisen verbunden ist und sich zusammen mit dem Bügeleisen neigt. Um eine unveränderliche Eintauchtiefe des Schwimmkörpers zu erreichen, kann der Schwimmkörper drehbar gelagert sein.

Eine veränderliche Eintauchtiefe des Schwimmkörpers in Abhängigkeit der Winkelstellung des Bügeleisens kann gezielt ausgenutzt werden, wenn sich der Schnittpunkt der Bewegungsbahn mit dem Flüssigkeitsspiegel bei Verdrehen des Bügeleisens trotz gleichbleibender Füllmenge bewegt. Der Schwimmkörper kann in diesem Fall so geführt werden, dass er drehfest mit dem Bügeleisen verbunden ist und sich zusammen mit diesem neigt, und so geformt sein, dass sich die Eintauchtiefe in Abhängigkeit der Winkelstellung derart verändert, dass bei gleichbleibender Füllmenge der Punkt des Schwimmkörpers, dessen Lage für die Füllstandsbestimmung bzw. Füllstandsanzeige maßgeblich ist, seine Lage in Bezug auf die Bewegungsbahn auch bei sich verändernder Winkelstellung des Bügeleisens zumindest im Bereich der Neigungslagen nicht verändert.

Vorteilhafterweise ist das Anzeigeelement der Füllstandsanzeige außerhalb des Flüssigkeitsbehälters angeordnet und mit steigendem Flüssigkeitspegel in Richtung auf den Eingang des Kanals bewegbar. Auf diese Weise ist das Anzeigeelement getrennt vom Flüssigkeitsbehälter angeordnet, deshalb gegenüber der Atmosphäre im Flüssigkeitsbehälter geschützt und besser sichtbar. Damit wird eine Befeuchtung der Oberfläche des Anzeigeelementes weitgehend vermieden, so dass die optische Sichtbarkeit des Anzeigeelementes nicht beeinträchtigt ist.

Ein Führungselement ist vorgesehen, das den Schwimmkörper führt, wobei der Schwimmkörper direkt am Führungselement anliegt. Diese Ausführungsform bietet eine präzise Führung des Schwimmkörpers und damit eine präzise Einstellung der Position des Anzeigeelementes.

Vorzugsweise ist der Kanal als Einfüllkanal für den Flüssigkeitsbehälter insbesondere für ein Bügeleisen ausgebildet. Auf diese Weise wird eine kompakte Anordnung der Füllstandsanzeige ermöglicht. Weiterhin ist es von Vorteil, das Anzeigeelement selbst als Sieb auszubilden, um Flüssigkeit, die über den Einfüllkanal in den Flüssigkeitsbehälter gegossen wird, zu filtern. Die Ausbildung des Anzeigeelementes als Sieb ermöglicht einen platzsparenden Aufbau der Füllstandsanzeige.

Die vorliegende Erfindung wird im folgenden unter Bezugnahme auf die beigefügte Zeichnung anhand bevorzugter Ausführungsbeispiele erläutert. In den Figuren zeigen:
- Fig. 1: eine perspektivische Darstellung eines Bügeleisens,
- Fig. 2: eine Schnittdarstellung eines Bügeleisens bei einer ersten Füllmenge,
- Fig. 3: eine Schnittdarstellung eines Bügeleisens bei einer zweiten Füllmenge,
- Fig. 4: eine Schnittdarstellung eines Bügeleisens mit einem Führungselement für den Schwimmkörper in einer ersten Winkelstellung,
- Fig. 5: eine Schnittdarstellung eines Bügeleisens gemäß Fig. 4 in einer zweiten Winkelstellung,
- Fig. 6: schematische Ansichten eines Flüssigkeitsbehälters in verschiedenen Winkelstellungen, und
- Fig. 7: schematische Ansichten eines Flüssigkeitsbehälters mit verschiedenen Füllmengen.

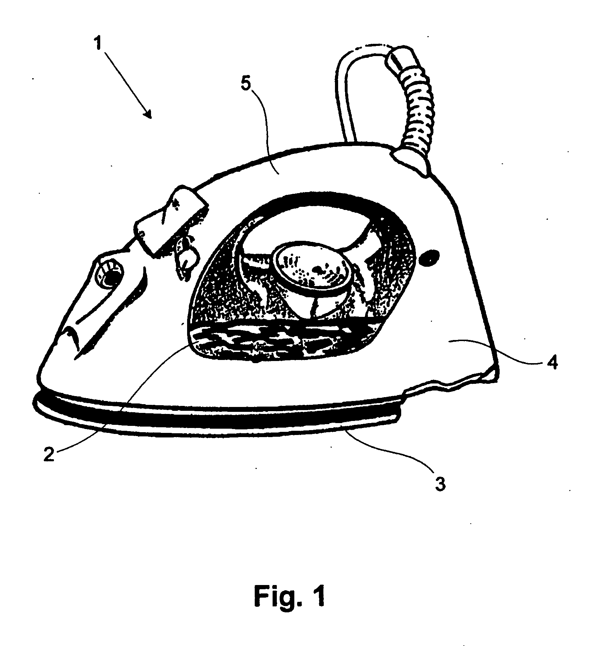

Figur 1 zeigt ein Bügeleisen 1, das ein Gehäuse 4 mit einem Griff 5 aufweist. Im Gehäuse 4 ist ein Flüssigkeitsbehälter 2 integriert, der zwischen einer Bügelsohle 3 und dem Griff 5 angeordnet ist. Im vorderen Bereich des Bügeleisens ist auf halber Höhe eine Einfüllöffnung 6 im Gehäuse 4 ausgebildet, über die Flüssigkeit in den Flüssigkeitsbehälter einfüllbar ist. Die Einfüllöffnung 6 dient gleichzeitig als Anzeigefeld.

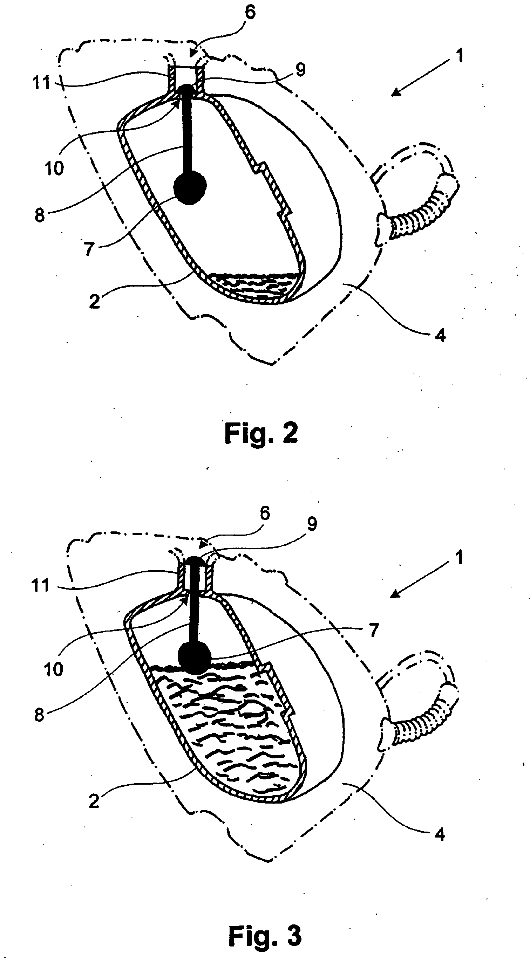

Figur 2 zeigt einen Schnitt durch das Bügeleisen 1, wobei die Form des Flüssigkeitsbehälters 2 deutlich erkennbar ist. Der Flüssigkeitsbehälter 2 weist eine Durchführung 10 auf, die im Bereich der Einfüllöffnung 6 angeordnet ist und an der sich nach außen hin ein zylinderförmiger Einfüllkanal 11 anschließt. Weiterhin ist im Flüssigkeitsbehälter 2 ein Schwimmkörper 7 angeordnet, der über eine Stange 8 mit einem Anzeigeelement 9 verbunden ist, wobei die Stange 8 durch die Durchführung 10 in den Einfüllkanal 11 geführt ist. Der Schwimmkörper 7 ist vorzugsweise in Form einer Kugel ausgebildet. Das Anzeigeelement 9 ist in Form einer Kappe ausgebildet, deren Durchmesser größer ist als der Durchmesser der Durchführung 10, so dass das Anzeigeelement 9 nicht in den Flüssigkeitsbehälter 2 fallen kann. In der dargestellten Position des Bügeleisens 1 ist der Flüssigkeitsbehälter 2 nur wenig gefüllt und liegt das Anzeigeelement 9 auf dem Flüssigkeitsbehälter 2 auf. Der Einfüllkanal 11 öffnet sich in Richtung auf das Gehäuse 6, wobei im Endbereich ein Ring als Anschlagelement für das Anzeigeelement 9 vorgesehen ist, der eine maximale Auslenkung des Anzeigeelementes 9 in Richtung auf die Öffnung des Einfüllkanals 11 begrenzt. Der Ring ist so weit am Ende des Einfüllkanals 11 angeordnet, dass das Anzeigeelement 9 deutlich von außen sichtbar ist.

Figur 3 zeigt das Bügeleisen mit einem höheren Flüssigkeitsstand im Flüssigkeitsbehälter 2, bei dem der Schwimmkörper 7 so weit in Richtung auf den Einfüllkanal 11 gehoben ist, dass das Anzeigeelement 9 am Ring anliegt. In dieser Position des Anzeigeelementes 9 kann das Anzeigelement 9 von außen durch eine Bedienperson deutlich im Einfüllkanal 11 gesehen werden. Damit ist ein deutlicher Hinweis auf eine maximale Befüllung des Flüssigkeitsbehälters 2 gegeben.

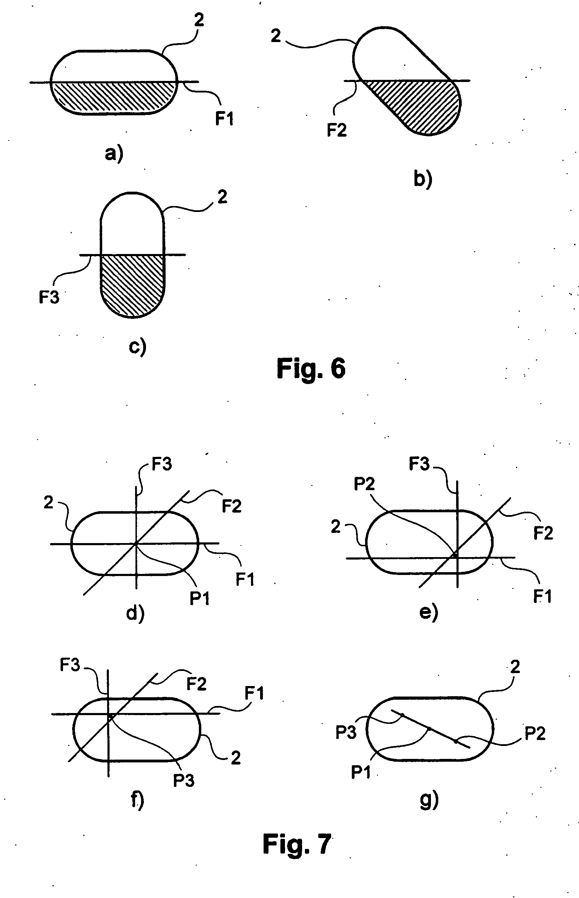

Der Schwimmkörper 7 wird in seiner Bewegung durch die Stange 8 zwangsgeführt, die zum einen in der Durchführung 10 und zum anderen mittels des Anzeigeelements 9 in dem Kanal 11 geführt ist. Dadurch wird eine Bewegungsbahn für den Schwimmkörper 7 festgelegt, die bei waagrecht angeordnetem Flüssigkeitsbehälter 2 im Wesentlichen in Verlängerung des Kanals 11 schräg durch den Flüssigkeitsbehälter 2 verläuft. Wenn man die waagrechte Bügelstellung und die schräge bis senkrechte Befüllstellung des Bügeleisens 1 als Endstellungen für einen Bereich von Neigungslagen betrachtet, verläuft die Bewegungsbahn des Schwimmkörpers 7 im Wesentlichen parallel zu der Winkelhalbierenden der Winkel der beiden Endstellungen. Daraus ergibt sich für die Füllstandsanzeige ein vorteilhaftes Anzeigeverhalten, das nachfolgend anhand der schematischen Darstellungen der Figuren 6 und 7 erläutert ist.

Figur 6 zeigt in den Abbildungen a) bis c) jeweils den Flüssigkeitsbehälter 2 mit der halben Höchstfüllmenge an Flüssigkeit in drei verschiedenen Winkelstellungen, wobei die vom Flüssigkeitsspiegel gebildeten Ebenen F1 bis F3 eingezeichnet sind. Abbildung a) zeigt den Flüssigkeitsbehälter 2 in der waagrechten Stellung, Abbildung b) in einer schrägen und Abbildung c) in einer senkrechten Position des Bügeleisens 1.

Figur 7 zeigt in den Abbildungen d) bis g) jeweils den Flüssigkeitsbehälter 2 in einer waagrechten Stellung mit den drei eingezeichneten Ebenen F1 bis F3 bei verschiedenen Füllmengen. Auch in der Figur 8 entspricht F1 der Ebene des Flüssigkeitsspiegels in waagrechter, F2 der Ebene des Flüssigkeitsspiegels in schräger und F3 der Ebene des Flüssigkeitsspiegels in senkrechter Stellung.

Abbildung d) zeigt die drei Ebenen F1 - F3 bei halber Füllung des Flüssigkeitsbehälters 2. Dabei kann festgestellt werden, dass sich alle drei Ebenen F1 - F3 in dem gleichen Punkt P1 schneiden. Daraus folgt, dass der Schwimmkörper 7 bei der halben Füllung in allen drei Winkelstellungen den gleichen Ort einnimmt, wenn seine Bewegungsbahn durch den Punkt P1 verläuft. Die Schnittgeraden der Flüssigkeitsebenen F1 - F3 liegen aufeinander oder zumindest nahe beieinander. Somit wird in allen drei Winkelstellungen bei dieser Füllmenge die Füllmenge richtig angezeigt.

Abbildung e) zeigt die drei Ebenen F1 - F3 bei viertel Füllung des Flüssigkeitsbehälters 2. In diesem Fall zeigt sich, dass sich die drei Ebenen F1 - F3 nicht in einem Punkt schneiden. Es kann kein Punkt gefunden werden, der gleichzeitig Bestandteil aller Ebenen F1 - F3 ist. Daraus ergibt sich die Unmöglichkeit, den Verlauf der Bewegungsbahn derart zu wählen, dass der Schwimmkörper 7 in allen drei Winkelstellungen den gleichen Ort einnimmt. Um den Einfluss der Winkelstellung auf die Stellung des Schwimmkörpers möglichst klein zu halten, kann als Punkt P2, durch den die Bewegungsbahn verlaufen soll, ein Punkt gewählt werden, der zu allen drei Ebenen F1 - F3 einen möglichst geringen Abstand besitzt. Dazu kann der Punkt P2 innerhalb des Dreiecks angeordnet werden, das von den drei Ebenen F1 - F3 begrenzt wird. Beispielsweise kann der Punkt P2 im Flächenmittelpunkt dieses Dreiecks angeordnet werden. Weiterhin besteht in so einem Fall die Möglichkeit, eine Winkelstellung zu priorisieren und den Punkt P2 so anzuordnen, dass er sich in geringerem Abstand insbesondere zu der Ebene befindet, die der priorisierten Winkelstellung entspricht. Vorliegend wurde der Punkt P2 so angeordnet, dass er zu allen Ebenen F1 - F3 den gleichen Abstand besitzt.

In der Abbildung f) sind die drei Ebenen F1 - F3 bei dreiviertel Füllung des Flüssigkeitsbehälters 2 gezeigt. Auch in diesem Fall schneiden sich die drei Ebenen F1 - F3 nicht in einem Punkt. Es kann wieder kein Punkt gefunden werden kann, der gleichzeitig Bestandteil aller Ebenen F1 - F3 ist, so dass der Verlauf der Bewegungsbahn nicht so gewählt werden kann, dass der Schwimmkörper 7 bei dieser Füllmenge in allen drei Winkelstellungen den gleichen Ort einnimmt. Für den Verlauf der Bewegungsbahn wird der entsprechende Punkt P3 wieder im Mittelpunkt des Dreiecks zwischen den drei Ebenen F1 - F3 angeordnet.

Aus den ermittelten Punkten P1 - P3 kann nun die in Abbildung g) dargestellte Bewegungsbahn zusammengesetzt werden. Dabei kann die Bewegungsbahn auch über die Endpunkte P1 und P3 hinaus verlängert werden. Falls dem Anzeigeelement 9 ein Anzeigefeld mit Mengenangaben zugeordnet wird, kann die Angabe für die halbe Füllmenge so angeordnet werden, dass die Anzeige bei dieser Füllmenge in allen Winkelstellungen korrekt ist. Bei den übrigen Füllmengen und insbesondere bei geringen bzw. hohen Füllmengen steigt der Einfluss der Winkelstellung auf den Ort des Schwimmkörpers 7, so dass eine korrekte Anzeige des Füllstands unter Umständen nur für eine Winkelstellung erreicht werden kann.

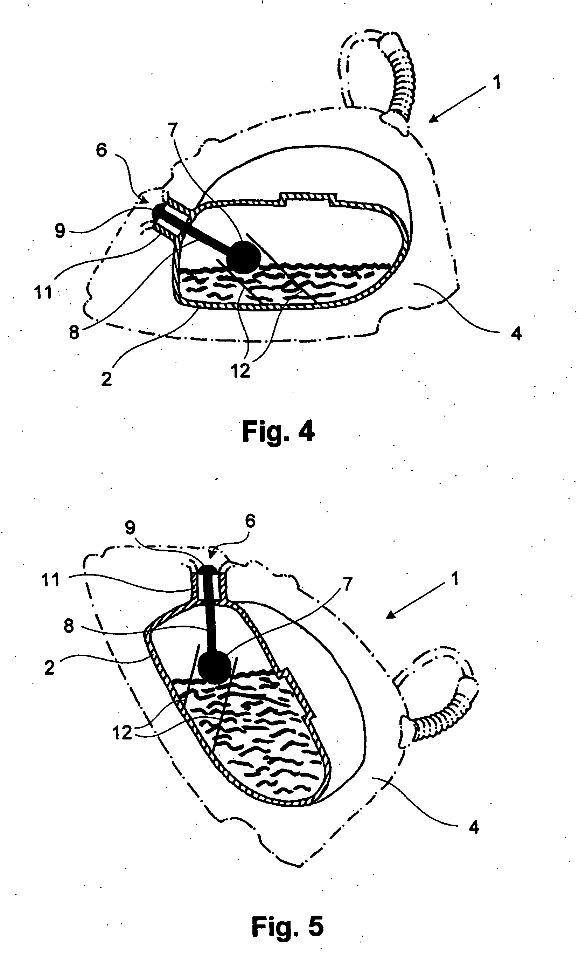

Die Figuren 4 und 5 zeigen eine weitere Ausführungsform der Erfindung, bei der im Flüssigkeitsbehälter 2 eine Führungshülse 12 vorgesehen ist. In der Führungshülse 12 ist der Schwimmkörper 7 beweglich angeordnet, wobei der Schwimmkörper 7 bei einer Lageänderung an der Führungshülse entlang gleitet. Die Führungshülse 12 ist in der Weise ausgebildet, dass der Schwimmkörper 7 bei einem vorgegebenen, maximalen Flüssigkeitsvolumen im Flüssigkeitsbehälter 2 in der Weise angeordnet ist, dass sich das Anzeigeelement 9 am Anschlag befindet.

Die Führungshülse 12 weist einen Schlitz auf, durch den die Stange 8 bei einer entsprechenden Position des Schwimmkörpers 7 geführt ist. Weiterhin sind in die Hülse 12 Ausnehmungen eingebracht, so dass Flüssigkeit bei einer entsprechenden Höhe des Füllstandes in die Hülse 12 einfließen kann.

In Figur 4 ist das Bügeleisen in einer waagrechten Position dargestellt. Figur 5 zeigt eine zweite Position des Bügeleisens, bei der üblicherweise Flüssigkeit in den Einfüllkanal 11 gefüllt wird. Auch in dieser Position des Bügeleisens 1 ist der Schwimmkörper 7 bei maximalem Füllvolumen des Flüssigkeitsbehälters 2 so hoch angehoben, dass das Anzeigeelement 9 am Ring anliegt.

In einer bevorzugten Ausführungsform ist das Anzeigeelement 9 in der Weise ausgebildet, das es als Sieb ausgebildet ist, so dass Flüssigkeit, die über den Einfüllkanal 11 eingefüllt wird, durch das Sieb gefiltert wird.

## Patentansprüche

1. Bügeleisen (1) mit einem Flüssigkeitsbehälter (2) und einer die Füllmenge anzeigenden Füllstandsanzeige,
**dadurch gekennzeichnet,**
**dass** die Füllstandsanzeige für jede bestimmte Füllmenge bei einer waagrechten Winkelstellung während des Bügelvorgangs und bei einer schrägen Winkelstellung in der Ruheposition des Bügeleisens (1) jeweils zumindest annähernd den gleichen Füllstandswert, d.h. mit einer Abweichung von weniger als 10 %, anzeigt, wobei im Flüssigkeitsbehälter ein Führungselement (12) vorgesehen ist, mit dem ein Schwimmkörper (7) in seiner Bewegung festgelegt ist, wobei der Schwimmkörper (7) direkt am Führungselement (12) anliegt, und der Schwimmkörper (7) in dem Führungselement (12) beweglich angeordnet ist, und bei einer Lageänderung an dem Führungselement (12) entlang gleitet.

2. Bügeleisen nach Anspruch 2, dadruch **gekennzeichnet**, dass die Bewegungsbahn des Schwimmkörpers (7) derart verläuft, dass für jede bestimmte Füllmenge der Schwimmkörper (7) in mehreren Neigungslagen des Bügeleisens die zumindest annähernd gleiche Höhenposition einnimmt.

3. Bügeleisen (1) nach Anspruch 2, **dadurch gekennzeichnet, dass** die Bewegungsbahn des Schwimmkörpers (7) entlang einer Reihe von Raumpunkten (P1-P3) verläuft, welche bei der ihnen jeweils zugeordneten Füllmenge einen geringen oder keinen Abstand zu den Flüssigkeitsspiegeln (F1-F3) besetzen, die von der jeweiligen Füllmenge bei den verschiedenen Neigungslagen gebildet werden.

4. Bügeleisen (1) nach Anspruch 3, **dadurch gekennzeichnet, dass** die Bewegungsbahn des Schwimmkörpers (7) entlang einer Reihe von Raumpunkten (P1-P3) verläuft, welche bei der ihnen jeweils zugeordneten Füllmenge auf der Schnittgerade von zwei Flüssigkeitsspiegeln (F1, F3) befinden, die von der jeweiligen Füllmenge bei zwei verschiedenen Neigungslagen gebildet werden.

5. Bügeleisen (1) nach einem der Ansprüche 2 bis 4, **dadurch gekennzeichnet, dass** die Bewegungsbahn des Schwimmkörpers (7) in einer Ebene liegt, in der die Schnittgerade von zwei Flüssigkeistsspiegein (F1, F3) liegt, die von der jeweiligen Füllmenge bei zwei verschiedenen Neigungslagen gebildet werden, wobei die Ebene mit diesen zwei Flüssigkeitsspiegein (F1, F3) jeweils den gleichen Winkel einschließt

6. Bügeleisen (1) nach Anspruch 4 oder 5, **dadurch gekennzeichnet, dass** die beiden Neigungslagen die Endwerte des Bereichs der im Betrieb des Bügeleisens (1) üblicherweise auftretenden Winkelstellungen bilden.

7. Bügeleisen (1) nach einem der Ansprüche 2 bis 6, **dadurch gekennzeichnet, dass** der Flüssigkeitsbehälter (2) innen so ausgeformt ist, dass bei verschiedenen Füllmengen die Schnittgeraden der Flüssigkeitsspiegel (F1-F3) bei den unterschiedlichen Neigungslagen aufeinander oder zumindest nahe beieinander liegen.

8. Bügeleisen (1) nach einem der Ansprüche 2 bis 7, **dadurch gekennzeichnet, dass** der Schwimmkörper (7) rotationssymmetrisch in Bezug auf eine Symmetrieachse ist, die parallel zur Drehachse der Neigungslagen ist.

9. Bügeleisen (1) nach einem der Ansprüche 2 bis 7, **dadurch gekennzeichnet, dass** der Schwimmkörper (7) drehfest mit dem Bügeleisen (1) verbunden ist und so geformt ist, dass sich seine Eintauchtiefe in Abhängigkeit der Neigungslagen derart verändert, dass bei gleichbleibender Füllmenge wenigstens ein Punkt des Schwimmkörpers (7) seine Lage in Bezug auf die Bewegungsbahn auch bei sich verändernder Neigungslage des Bügeleisens (1) nicht verändert.

10. Bügeleisen (1) nach Anspruch 1, **dadurch gekennzeichnet, dass** der Schwimmkörper die Form einer Kugel aufweist und das Führungselement (12) als Führungshülse ausgebildet ist, in der der Schwimmkörper in einer vorgegebenen Richtung geführt ist.

11. Bügeleisen (1) nach einem der Ansprüche 2 bis 8, **dadurch gekennzeichnet, dass** der Schwimmkörper mit einem drehbar am Flüssigkeitsbehälter (2) gelagerten Schwenkarm verbunden ist.

12. Bügeleisen (1) einem der Ansprüche 2 bis 11, **dadurch gekennzeichnet, dass** der Schwimmkörper (7) mittels eines Verbindungselements (8) mit einem Anzeigelement (9) verbunden ist, dessen Stellung von der Stellung des Schwimmkörpers (7) abhängt, und das Anzeigeelement (9) außerhalb des Flüssigkeitsbehälters (2) und in der Nähe einer Befüllöffnung (6) des Flüssigkeitsbehälters (2) angeordnet ist.

13. Bügeleisen (1) nach Anspruch 12, **dadurch gekennzeichnet, dass** das Anzeigeelement (9) innerhalb eines Einfüllkanals (11) angeordnet ist, der die Befüllöffnung (6) aufweist.

14. Bügeleisen (1) nach Anspruch 13, **dadurch gekennzeichnet, dass** das Anzeigeelement (9) als Sieb ausgebildet ist und den Querschnitt des Einfüllkanals (11) abdeckt.

15. Bügeleisen (1) nach einem der Ansprüche 12 bis 14, **dadurch gekennzeichnet, dass** das Verbindungselement (8) als Stange ausgebildet ist, die durch eine Wandung des Flüssigkeitsbehälters (2) geführt ist.

16. Bügeleisen (1) nach einem der Ansprüche 13 bis 15, **dadurch gekennzeichnet, dass** ein Anschlag im Einfüllkanal (11) vorgesehen ist, der die Bewegung des Anzeigeelementes (9) in Richtung auf den Öffnungsbereich des Kanals (11) auf eine maximale Position begrenzt.

## Claims

1. Iron (1) with a liquid container (2) and a filling state indication indicating the filling quantity, **characterised in that** the filling state indication indicates at least approximately the same filling state value, i.e. with a deviation of less than 10%, for each specific filling quantity in each of a horizontal angle setting during the ironing process and an inclined angle setting in the rest position of the iron (1), wherein a guide element (12) with which a float body (7) is fixed in its movement is provided in the liquid container, wherein the float body (7) bears directly against the guide element (12), and the float body (7) is movably arranged in the guide element (12) and slides along the guide element (12) when a change in position occurs.

2. Iron according to claim 1, **characterised in that** the movement path of the float body (7) runs in such a manner that for each specific filling quantity the float body (7) adopts at least approximately the same height position in several inclined positions of the iron.

3. Iron (1) according to claim 2, **characterised in that** the movement path of the float body (7) runs along a series of spatial points (P1 - P3) which in the case of the filling quantity respectively associated therewith have a small or no spacing from the liquid surfaces (F1 - F3) formed by the respective filling quantity at the different inclination positions.

4. Iron (1) according to claim 3, **characterised in that** the movement path of the float body (7) runs along a series of spatial points (P1 - P3) which in the case of the filling quantity respectively associated therewith are disposed on the intersecting line of two liquid surfaces (F1, F3) formed by the respective filling quantity at two different inclination positions.

5. Iron (1) according to one of claims 2 to 4, **characterised in that** the movement path of the float body (7) lies in a plane in which the intersecting line of two liquid surfaces (F1, F3), which are formed by the respective filling quantity at two different inclination positions, lies, wherein the plane respectively includes the same angle with these two liquid surfaces (F1, F3).

6. Iron (1) according to claim 4 or 5, **characterised in that** the two inclination positions form the end values of the region of the angle settings usually arising in operation of the iron (1).

7. Iron (1) according to one of claims 2 to 6, **characterised in that** the liquid container (2) is so shaped internally that with different filling quantities the intersecting lines of the liquid surface (F1 - F3) lie on one another or at least closely adjacent to one another in the case of different inclination positions.

8. Iron (1) according to one of claims 2 to 7, **characterised in that** the float body (7) is rotationally symmetrical with respect to a symmetry axis parallel to the rotational axis of the inclination positions.

9. Iron (1) according to one of claims 2 to 7, **characterised in that** the float body (7) is connected with the iron (1) to be secure against rotation relative thereto and is so shaped that its immersion depth changes in dependence on the inclination positions in such a manner that with the same filling quantity at least one point of the float body (7) does not change its position with respect to the movement path even when the inclination position of the iron (1) changes.

10. Iron (1) according to claim 1, **characterised in that** the float body has the form of a sphere and the guide element (12) is constructed as a guide sleeve in which the float body is guided in a predetermined direction.

11. Iron (1) according to one of claims 2 to 8, **characterised in that** the float body is connected with a pivot arm rotatably mounted at the liquid container (2).

12. Iron (1) according to one of claims 2 to 11, **characterised in that** the float body (7) is connected by means of a connecting element (8) with an indicating element (9), the setting of which depends on the setting of the float body (7), and the indicating element (9) is arranged outside the liquid container (2) and in the vicinity of a filling opening (6) of the liquid container (2).

13. Iron (1) according to claim 12, **characterised in that** the indicating element (9) is arranged within a filling channel (11) having the filling opening (6).

14. Iron (1) according to claim 13, **characterised in that** the indicating element (9) is constructed as a sieve and covers the cross-section of the filling channel (11).

15. Iron (1) according to one of claims 12 to 14, **characterised in that** the connecting element (8) is constructed as a rod which is guided by a wall of the liquid container (2).

16. Iron (1) according to one of claims 13 to 15, **characterised in that** an abutment limiting the movement of the indicating element (9) in direction towards the opening region of the channel (11) to a maximum position is provided in the filling channel (11).

## Revendications

1. Fer à repasser (1) comprenant un réservoir de liquide (2) et un indicateur de niveau de remplissage indiquant la quantité de remplissage,
**caractérisé en ce que**
l'indicateur du niveau de remplissage indique pour chaque quantité de remplissage définie, avec une position d'angle horizontale, pendant l'opération de repassage et dans une position d'angle inclinée dans la position de repos du fer à repasser (1) à chaque fois au moins approximativement la même valeur de niveau de remplissage, c'est-à-dire avec un écart de moins de 10 %, un élément de guidage (12) étant prévu dans le réservoir de liquide, élément avec lequel un flotteur (7) est fixé dans son déplacement, le flotteur (7) s'appuyant directement sur l'élément de guidage (12), et le flotteur (7) étant disposé de façon mobile dans l'élément de guidage (12) et glissant sur l'élément de guidage (12) lors d'une variation de position.

2. Fer à repasser selon la revendication 2, **caractérisé en ce que** la trajectoire de déplacement du flotteur (7) est agencée de telle sorte que, pour chaque quantité de remplissage définie, le flotteur (7) occupe dans plusieurs positions d'inclinaison du fer à repasser la position de hauteur au moins approximativement identique.

3. Fer à repasser (1) selon la revendication 2, **caractérisé en ce que** la trajectoire de déplacement du flotteur (7) longe une série de points d'espace (P1-P3) qui, avec la quantité de remplissage qui leur est respectivement attribuée, présentent une distance faible ou aucune distance par rapport aux niveaux de liquide (F1-F3), qui sont formés par la quantité de remplissage respective dans différentes positions d'inclinaison.

4. Fer à repasser (1) selon la revendication 3, **caractérisé en ce que** la trajectoire de déplacement du flotteur (7) est disposée le long d'une série de points d'espace (P1-P3), qui, avec une quantité de remplissage qui leur est respectivement attribuée, se trouvent sur la droite d'intersection de deux niveaux de liquide (F1, F3), qui sont formés par la quantité de remplissage respective avec deux positions d'inclinaison différentes.

5. Fer à repasser (1) selon l'une quelconque des revendications 2 à 4, **caractérisé en ce que** la trajectoire de déplacement du flotteur (7) se situe dans un plan dans lequel se situe la droite d'intersection de deux niveaux de liquide (F1, F3), qui sont formés par la quantité de remplissage respective avec deux positions d'inclinaison différentes, le plan formant respectivement le même angle avec ces deux niveaux de liquide (F1, F3).

6. Fer à repasser (1) selon la revendication 4 ou 5, **caractérisé en ce que** les deux positions d'inclinaison forment les valeurs d'extrémité de la zone des positions d'angle apparaissant habituellement pendant le fonctionnement du fer à repasser (1).

7. Fer à repasser (1) selon l'une quelconque des revendications 2 à 6, **caractérisé en ce que** le réservoir de liquide (2) est formé à l'intérieur de telle sorte que, pour différentes quantités de remplissage, les droites d'intersection des niveaux de liquide (F1-F3) sont disposées les unes au-dessus des autres ou au moins les unes à proximité des autres avec les différentes positions d'inclinaison.

8. Fer à repasser (1) selon l'une quelconque des revendications 2 à 7, **caractérisé en ce que** le flotteur (7) est symétrique en rotation par rapport à un axe de symétrie qui est parallèle à l'axe de rotation des positions d'inclinaison.

9. Fer à repasser (1) selon l'une quelconque des revendications 2 à 7, **caractérisé en ce que** le flotteur (7) est relié de façon solidaire en rotation au fer à repasser (1) et formé de telle sorte que sa profondeur d'immersion varie en fonction des positions d'inclinaison de telle sorte que, pour une quantité de remplissage uniforme, au moins un point du flotteur (7) ne modifie pas sa position par rapport à la trajectoire de déplacement même avec une position d'inclinaison variable du fer à repasser (1).

10. Fer à repasser (1) selon la revendication 1, **caractérisé en ce que** le flotteur a la forme d'une sphère et l'élément de guidage (12) est conçu comme douille de guidage dans laquelle le flotteur est guidé dans une position prédéfinie.

11. Fer à repasser (1) selon l'une quelconque des revendications 2 à 8, **caractérisé en ce que** le flotteur est relié à un bras pivotant logé de façon rotative sur le réservoir de liquide (2).

12. Fer à repasser (1) selon l'une quelconque des revendications 2 à 11, **caractérisé en ce que** le flotteur (7) est relié au moyen d'un élément de liaison (8) à un élément d'affichage (9), dont la position dépend de la position du flotteur (7) et l'élément d'affichage (9) est disposé à l'extérieur du réservoir de liquide (2) et à proximité d'une ouverture de remplissage (6) du réservoir de liquide (2).

13. Fer à repasser (1) selon la revendication 12, **caractérisé en ce que** l'élément d'affichage (9) est disposé à l'intérieur d'un conduit de remplissage (11) qui présente l'ouverture de remplissage (6).

14. Fer à repasser (1) selon la revendication 13, **caractérisé en ce que** l'élément d'affichage (9) est conçu comme tamis et recouvre la section du conduit de remplissage (11).

15. Fer à repasser (1) selon l'une quelconque des revendications 12 à 14, **caractérisé en ce que** l'élément d'affichage (8) est conçu comme barre qui est guidée par une paroi du réservoir de liquide (2).

16. Fer à repasser (1) selon l'une quelconque des revendications 13 à 15, **caractérisé en ce qu'**une butée est prévue dans le conduit de remplissage (11), qui limite le déplacement de l'élément d'affichage (9) en direction de la zone d'ouverture du conduit (11) à une position maximale.
